Europäisches Patentamt

European Patent Office

Office européen des brevets

(11) Veröffentlichungsnummer: 0 188 788
A2

## (12) EUROPÄISCHE PATENTANMELDUNG

(21) Anmeldenummer: 85116350.1

(22) Anmeldetag: 20.12.85

(51) Int. Cl.4: G01D 5/16

(30) Priorität: 24.12.84 DE 3447326

(43) Veröffentlichungstag der Anmeldung:
30.07.86 Patentblatt 86/31

(84) Benannte Vertragsstaaten:
BE DE FR GB IT SE

(71) Anmelder: International Standard Electric
Corporation
320 Park Avenue
New York New York 10022(US)
Anmelder: Standard Elektrik Lorenz
Aktiengesellschaft
Lorenzstrasse 10
D-7000 Stuttgart 40(DE)

(72) Erfinder: Meyer, Hans Peter
Maxplatz 32
D-8500 Nürnberg(DE)
Erfinder: Becker, Helmut, Dr.
Noriker Strasse 19
D-8500 Nürnberg(DE)

(74) Vertreter: Hösch, Günther, Dipl.-Ing. et al
c/o Standard Elektrik Lorenz AG Patent- und
Lizenzwesen Kurze Strasse 8 Postfach 300 929
D-7000 Stuttgart 30(DE)

(54) Magnetfelddetektor.

(57) Ein Magnetfelddetektor mit einem Magnetfeldsensor, der wenigstens zwei auf einem Träger als dünne Schicht aufgebrachte streifenförmige, parallel zueinander verlaufende magnetfeldabhängige Widerstände aufweist, die von einem Magnetfeld eines Permanentmagneten durchsetzt sind, dessen eine Polfläche parallel zu den magnetfeldabhängigen Widerständen verläuft, weist erfindungsgemäß folgende Merkmale auf:

- der Träger (1) besteht aus einer isolierenden Platte;

- die magnetfeldabhängigen Widerstände (2 bis 9) bestehen aus ferromagnetischem Material;

- die Schichtdicke der magnetfeldabhängigen Widerstände (2 bis 9) beträgt maximal 0,5μm;

- die magnetfeldabhängigen Widerstände (2 bis 9) weisen Anisotropie auf mit der leichten Richtung in Streifenlängsrichtung (10);

- der Permanentmagnet (34) liegt unmittelbar oder über eine weichmagnetische Polplatte (32) am Träger (1) an der den magnetfeldabhängigen Widerständen (2 bis 9) gegenüberliegenden Fläche (31) an;

- es ist keine magnetische Rückführung vorgesehen;

- der Träger (1) und der Permanentmagnet (34) und gegebenenfalls die Polplatte (32) sind in einer unmagnetischen Halterung (35) oder einem unmagnetischen Gehäuse gehalten.

Durch diese Anordnung erhält man einen von Fremdfeldern praktisch unabhängigen Magnetfelddetektor, der zusätzlich sehr kleine Abmessungen aufweisen kann.

Magnetfelddetektor

Die vorliegende Erfindung bezieht sich auf einen Magnetfelddetektor gemäß dem Oberbegriff des Anspruchs 1.

Ein derartiger Magnetfelddetektor ist bekannt aus der DE-OS 24 26 420. Dort sind die als magnetfeldabhängige Halbleiterwiderstände ausgebildeten Sensoren unmittelbar auf der Polfläche des Permanentmagneten aufgebracht und der Permanentmagnet ist mit einem Joch umgeben. Dort sind je zwei magnetfeldabhängige Halbleiterwiderstände in Längsrichtung nebeneinander angeordnet.

Mit der vorliegenden Erfindung soll die Aufgabe gelöst werden, den Aufbau eines derartigen Magnetfelddetektors zu vereinfachen und so zu gestalten, daß ein Magnetfelddetektor mit sehr kleinen Abmessungen herstellbar ist.

Gelöst wird diese Aufgabe erfindungsgemäß durch die im Kennzeichen des Anspruchs 1 angegebenen Merkmale. Durch den Aufbau und die Anordnung der magnetfeldabhängigen Widerstände und des Permanentmagneten ohne magnetischen Rückschluß wird ein kompakter Aufbau erreicht, der bereits auf sehr geringe Feldstärke von beispielsweise 1 bis 2 Oersted anspricht und trotzdem, auch bei sehr kleinen Abmessungen, praktisch unempfindlich ist gegen den Einfluß äußerer Magnetfelder.

Weitere vorteilhafte Einzelheiten der Erfindung sind in den Unteransprüchen angegeben und nachfolgend anhand eines in der Zeichnung veranschaulichten Ausführungsbeispiels beschrieben. Dabei zeigen:

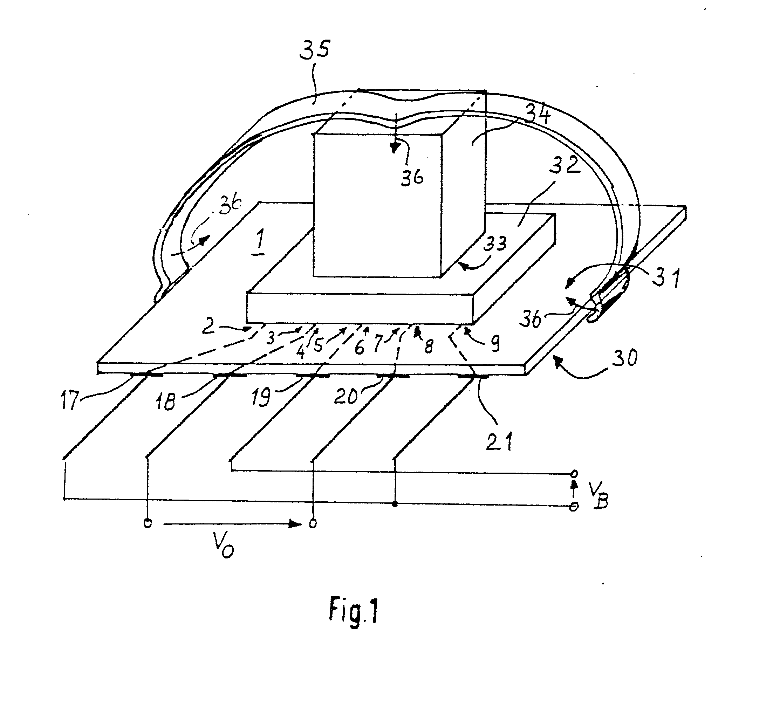

Fig. 1 einen Magnetfelddetektoraufbau mit einem Magnetfeldsensor gemäß Fig. 2 oder 3 und

Fig. 2 und 3 je einen Magnetfeldsensoraufbau für einen Magnetfelddetektor gemäß Fig. 1.

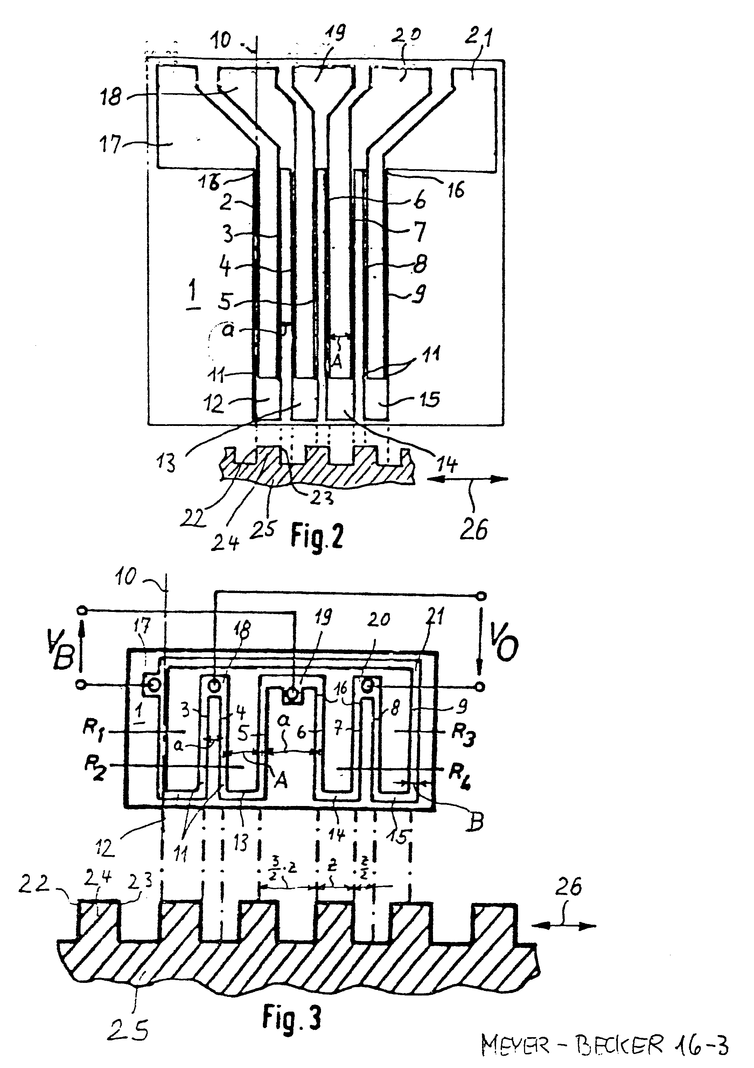

Auf einem plattenförmigen isolierenden Träger 1 sind auf der in der Zeichnung nach unten weisenden Fläche 30 magnetfeldabhängige Widerstände 2 bis 9 aufgebracht, die mit Anschlußelektroden 17 bis 21 versehen sind. Diese Anordnung bildet einen Magnetfeldsensor, der anhand der Fig. 2 und 3 noch näher beschrieben wird. Auf der den magnetfeldabhängigen Widerständen 2 bis 9 abgewandten Fläche 31 liegt eine Polplatte 32 aus weichmagnetischem Material auf, die die von den magnetfeldabhängigen Widerständen 2 bis 9 bedeckte Fläche allseitig überdeckt. Die Polplatte 32 haftet an einem vorzugsweise zentrisch auf die Polplatte 32 mit seiner einen Polfläche 33 aufgesetzten Permanentmagneten 34. Bei genügend großer Polfläche 33 bzw. entsprechend großem Querschnitt des Permanentmagneten 34 kann die Polplatte 32 auch weggelassen werden.

An die Anschlußelektroden 17/21 und 19 ist eine Betriebsspannung $V_B$ anschließbar und an den Anschlußelektroden 18 und 20 kann die Brückenspannung $V_O$ abgenommen und einem Nullspannungsindikator zugeleitet werden.

Die Anordnung aus Träger 1 und Permanentmagnet 34 sowie erforderlichenfalls einer Polplatte 32 kann durch eine geeignete Halterung 35, beispielsweise einen federnden Haltebügel oder einen Gehäusebecher aus unmagnetischem Metall oder aus Kunststoff, Glas oder Keramik, zusammengehalten werden. Die Bauelemente dieser Anordnung können auch, gegebenenfalls zusätzlich, miteinander verklebt sein. Der Haltebügel 35 hält die Bauelemente durch die mit 36 bezeichneten Kraftkomponenten zusammen. Der Querschnitt des Permanentmagneten 24 kann sehr klein sein, z.B. 4 x 4 bis 6 x 6mm und die Polplatte 32 kann z.B. die Abmessungen 10 x 10mm besitzen.

Nachfolgend sind anhand der Fig. 2 und 3 die Magnetfeldsensoren näher beschrieben.

Mit 1 ist ein Träger aus isolierendem, unmagnetischem Material bezeichnet. Es besteht beispielsweise aus Glas oder Keramik. Auf einer Seite 30 ist er mit n • 2 mit n = 1, 2, 3... eng benachbarten parallelen Streifen von magnetfeldabhängigen Widerständen 2 bis 9 aus ferromagnetischem Material versehen. Diese bestehen z.B. aus einer Legierung von NiFe oder CoFeB oder FeB etc, die durch einen geeigneten Beschichtungsprozeß, beispielsweise durch Sputtern, in einer Schichtdicke von maximal 0,5 μm aufgebracht ist. Während oder nach dem Beschichtungsprozeß wird diese Schicht einem derartigen Magnetfeld ausgesetzt, daß die magnetfeldabhängigen Widerstände 2 bis 9 in einachsige Anisotropie mit der leichten Richtung parallel zu den Streifen aufweisen. Hierdurch ist gewährleistet, daß jede Magnetfeldkomponente H, die in Richtung senkrecht zur Streifenlängsachse 10 und in der Ebene der Streifen 2 bis 9 bzw. des Trägers 1 auftritt, eine Änderung des magnetfeldabhängigen Widerstandes $R_M$ im gleichen Sinne bewirkt. Die magnetfeldabhängigen Widerstände 2 bis 9 besitzen eine nichtlineare Kennlinie $R_M$ = f-(H).

Je zwei magnetfeldabhängige Widerstände 2, 3; 4, 5; 6, 7; 8, 9 bilden ein Widerstandspaar $R_1$, $R_2$, $R_3$, $R_4$, indem sie jeweils mit ihren in der Zeichenebene unten befindlichen Enden 11 durch vorzugsweise ebenfalls auf dem Träger 1 aufgebrachte, z.B. aufgesputterte Verbindungselektroden 12 bzw. 13 bzw. 14 bzw. 15 miteinander verbunden sind. Die oberen Enden 16 der magnetfeldabhängigen Widerstände 2 bis 9 sind mit Anschlußelektroden 17 bis 21 versehen. Im Ausführungsbeispiel gemäß Fig. 2 besitzt jeder äußere magnetfeldabhängige Widerstand 2 bis 9 je eine gesonderte Anschlußelektrode 17 bzw. 21, wogegen die Anschlußelektroden 18, 19, 20 je einen magnetfeldabhängigen Widerstand 3, 5, 7 des einen magnetfeldabhängigen Widerstandspaares 2, 3; 4, 5; 6, 7; 8, 9 mit dem angrenzenden magnetfeldabhängigen Widerstand 4 bzw. 6 bzw. 8 des benachbarten magnetfeldabhängigen Widerstandspaares verbindet. Hierdurch ist es in einfacher Weise möglich, den gesamten Magnetfeldsensor an einer Seite zu kontaktieren und zugleich als Brückenschaltung beispielsweise für eine Wheatstone-Brücke zu beschalten. Bei der in Fig. 3 gezeigten Anordnung sind die Anschlußelektroden 17 und 21 bereits auf dem Träger 1 miteinander verbunden, so daß sich gleich die vier Anschlüsse für die Meßbrücke ergeben. Dabei ist an die Anschlußelektroden 17/21 und 19 die Batteriespannung $V_B$ angelegt und an den Anschlußelektroden 18 und 20 wird die erhaltene Brückenspannung $V_O$ abgenommen.

Die Breite B der magnetfeldabhängigen Widerstände 2 bis 9 beträgt vorzugsweise 0,01 bis 0,1 mm, insbesondere 0,03 bis 0,07 mm. Der Abstand A zwischen zwei magnetfeldabhängigen Widerständen 2, 3; 4, 5; 6, 7; 8, 9 beträgt vorzugsweise 0,2 bis 1mm, insbesondere 0,5 bis 0,7 mm und entspricht erfindungsgemäß dem Abstand zweier Zahnflanken 22, 23 des Zahnes 24 eines weich- oder hartmagnetischen Zahnrades oder einer Zahnstange 25 mit gleicher Nut- und Zahnbreite oder einem Steg einer an sich bekannten entsprechend ausgebildeten Magnetfeld-Streufeldmaske oder einem ungeradzahligen Vielfachen davon. Die Zahnstange bzw. das Zahnrad 25 ist in den Fig. 2 und 3 um 90° geschwenkt dargestellt. Tatsächlich befindet sie bzw. es sich über den magnetfeldabhängigen Widerstandspaaren 2 bis 9 und die Dicke des Zahnrades bzw.

die Breite der Zahnstange erstreckt sich zweckmäßig über die gesamte Länge der Streifen der magnetfeldabhängigen Widerstandspaare. Die möglichen Bewegungsrichtungen sind durch den Doppelpfeil 26 angedeutet.

Der Abstand a zwischen zwei angrenzenden magnetfeldabhängigen Widerständen 3, 4; 5, 6; 7, 8; benachbarter magnetfeldabhängiger Widerstandspaare beträgt vorzugsweise 0,1 bis 0,6 mm, insbesondere 0,2 bis 0,4 mm und entspricht erfindungsgemäß der halben Zahn- oder Nutbreite oder einem ungeradzahligen Vielfachen davon. Der Abstand A ist daher definiert durch die Formel $A = n \bullet z$ mit $n = 1, 3, 5...$ und $z =$ die Breite eines Zahnes oder einer gleichbreiten Nut und der Abstand $a = n \bullet \frac{z}{2}$ mit $n = 1, 3, 5...$ . Bei Einhaltung dieser Forderung können die magnetfeldabhängigen Widerstände 2 bis 9 auf einem Träger 1 unterschiedliche Abstände besitzen, wie z.B. in Fig. 3 gezeigt. Dort beträgt der Abstand a zwischen den magnetfeldabhängigen Widerständen 3 und $4 = \frac{1}{2} \bullet z$ und derjenige zwischen den magnetfeldabhängigen Widerständen 5 und $6 \frac{3}{2} \bullet z$.

Der elektrische Widerstand der Verbindungselektroden 2 bis 15 und der Anschlußelektroden 17 bis 21 soll möglichst niederohmig sein und soll die Widerstandsänderung der magnetfeldabhängigen Widerstände möglichst nicht beeinflussen. Dies wird durch großflächige, beispielsweise wenigstens annähernd rechteckige oder quadratische Ausbildung der Verbindungselektroden 12 bis 15 und ggf. auch der Anschlußelektroden 17 bis 21 erreicht, wobei die Breite dem Abstand der Außenkanten der beiden jeweils zu verbindenden magnetfeldabhängigen Widerstände 2, 3; 4, 5; 6, 7; 8, 9 ist. Damit auch die Anschlußelektroden 17 bis 21 bei sehr enger Benachbarung der einzelnen magnetfeldabhängigen Widerstände großflächig ausgebildet werden können, werden diese zweckmäßig von den mittleren zu den äußeren magnetfeldabhängigen Widerständen hin nach außen schräg versetzt angeordnet, wie anhand der Fig. 2 veranschaulicht. Die Verbindungselektroden 12 bis 15 und die Anschlußelektroden 17 bis 21 können vorzugsweise aus dem gleichen Material bestehen wie die magnetfeldabhängigen Widerstände 2 bis 9, so daß nur ein einziger Beschichtungsprozess notwendig ist.

## Ansprüche

1. Magnetfelddetektor mit einem Magnetfeldsensor, der wenigstens zwei auf einem Träger als dünne Schicht aufgebrachte streifenförmige, parallel zueinander verlaufende magnetfeldabhängige Widerstände aufweist, die von einem Magnetfeld eines Permanentmagneten durchsetzt sind, dessen eine Polfläche parallel zu den magnetfeldabhängigen Widerständen verläuft, **gekennzeichnet durch** die Kombination folgender Merkmale:

- der Träger (1) besteht aus einer isolierenden Platte;

- die magnetfeldabhängigen Widerstände (2 bis 9) bestehen aus ferromagnetischem Material;

- die Schichtdicke der magnetfeldabhängigen Widerstände (2 bis 9) beträgt maximal 0,5 $\mu$m;

- die magnetfeldabhängigen Widerstände (2 bis 9) weisen Anisotropie mit der leichten Richtung in Streifenlängsrichtung (10) auf;

- der Permanentmagnet (34) liegt unmittelbar oder über eine weichmagnetische Polplatte (32) am Träger (1) an der den magnetfeldabhängigen Widerständen (2 bis 9) gegenüberliegenden Fläche (31) an;

- es ist keine magnetische Rückführung vorgesehen;

- der Träger (1) und der Permanentmagnet (34) und gegebenenfalls die Polplatte (32) sind in einer unmagnetischen Halterung (35) oder einem unmagnetischen Gehäuse gehaltert.

2. Magnetfelddetektor nach Anspruch 1, dadurch gekennzeichnet, daß die magnetfeldabhängigen Widerstände (2 bis 9) mäanderförmig angeordnet und jeweils die Verbindungsstellen einer Seite (16) als Anschlußelektroden (17 bis 21) ausgebildet sind.

3. Magnetfelddetektor nach Anspruch 1 oder 2, dadurch gekennzeichnet, daß alle magnetfeldabhängigen Widerstände (2 bis 9) parallel nebeneinander in einer Ebene angeordnet sind und jeweils zwei benachbarte magnetfeldabhängige Widerstände (2, 3; 4,5; 6, 7; 8, 9) je ein Widerstandspaar bilden und vier Widerstandspaare parallel zueinander nebeneinander auf dem Träger (1) vorgesehen sind.

4. Magnetfelddetektor nach einem der Ansprüche 1 bis 3, dadurch gekennzeichnet, daß bei Verwendung für ein weichmagnetisches Zahnrad oder eine Zahnstange (25) mit gleicher Zahn- und Nutenbreite die magnetfeldabhängigen Widerstände (2, 3; 4, 5; 6, 7; 8, 9) je eines Widerstandspaares voneinander im Abstand (A) der Zahnbreite (z) oder einem ungeradzahligen Vielfachen davon und die Widerstandspaare voneinander im Abstand (a) einer halben Zahnbreite (z) oder einem ungeradzahligen Vielfachen davon angeordnet sind.

Fig.1

H.P. Meyer - H. Becker 16-?

Fig. 2

Fig. 3

MEYER - BECKER 16-3